# EUROPÄISCHE PATENTSCHRIFT

(11) **EP 3 174 654 B1**
(45) Veröffentlichungstag und Bekanntmachung des Hinweises auf die Patenterteilung: **27.03.2019**
(21) Anmeldenummer: 15744100.7
(22) Anmeldetag: 20.05.2015
(51) Int. Cl.: B22F 3/105, B22F 5/00, B08B 15/00, B29C 64/153

(54) **VORRICHTUNG UND VERFAHREN ZUR GENERATIVEN HERSTELLUNG ZUMINDEST EINES BAUTEILBEREICHS EINES BAUTEILS**
DEVICE AND METHOD FOR ADDITIVELY PRODUCING AT LEAST ONE COMPONENT REGION OF A COMPONENT
DISPOSITIF ET PROCÉDÉ DE FABRICATION GÉNÉRATIVE D'AU MOINS UNE REGION D'UN COMPOSANT

(30) Priorität: 30.07.2014 DE 102014214943
(43) Veröffentlichungstag der Anmeldung: 07.06.2017
(73) Patentinhaber: MTU Aero Engines AG, 80995 München (DE)
(72) Erfinder: SCHLICK, Georg, 80809 München (DE); KUSKA, Friedrich, 85229 Niederroth (DE)
(86) Internationale Anmeldenummer: PCT/DE2015/000260
(87) Internationale Veröffentlichungsnummer: WO 2016/015694

(56) Entgegenhaltungen:
- WO-A1-2015/173355
- WO-A2-2014/202413
- DE-A1-102004 031 881
- DE-A1-102010 052 206

## Beschreibung

Die Erfindung betrifft eine Vorrichtung zur generativen Herstellung zumindest eines Bauteilbereichs eines Bauteils, insbesondere eines Bauteils einer Strömungsmaschine gemäß dem Oberbegriff des Anspruchs 1. Die Erfindung betrifft weiterhin ein Verfahren zur generativen Herstellung zumindest eines Bauteilbereichs eines Bauteils gemäß dem Oberbegriff des Anspruchs 7.

Verfahren und Vorrichtungen zur Herstellung von Bauteilen sind in einer großen Vielzahl bekannt. Insbesondere sind generative Fertigungsverfahren (sog. Rapid Manufacturing- bzw. Rapid Prototyping-Verfahren) bekannt, bei denen das Bauteil durch pulverbettbasierte, additive Fertigungsverfahren schichtweise aufgebaut wird. Vorwiegend metallische Bauteile können beispielsweise durch Laser- bzw. Elektronenstrahlschmelz- oder -sinterverfahren hergestellt werden. Dabei wird zunächst schichtweise mindestens ein pulverförmiger Bauteilwerkstoff auf eine Bauteilplattform im Bereich einer Aufbau- und Fügezone der Vorrichtung aufgetragen. Anschließend wird der Bauteilwerkstoff schichtweise lokal verschmolzen und/oder versintert, indem dem Bauteilwerkstoff im Bereich der Aufbau- und Fügezone Energie mittels wenigstens eines Hochenergiestrahls, zum Beispiel eines Elektronen- oder Laserstrahls zugeführt wird. Der Hochenergiestrahl wird dabei in Abhängigkeit einer Schichtinformation der jeweils herzustellenden Bauteilschicht gesteuert. Nach dem Verschmelzen und/oder Versintern wird die Bauteilplattform schichtweise um eine vordefinierte Schichtdicke abgesenkt. Danach werden die genannten Schritte bis zur endgültigen Fertigstellung des Bauteils wiederholt.

Eine Vorrichtung sowie ein Verfahren zur generativen Hesrtellung zumindest eines Bauteilbereichs eines Bauteils ist beispielsweise aus der DE 10 2010 052 206 A1 und aus der nachveröffentlichten DE 10 2014 108 061 A1 bekannt. Aus der DE 10 2006 041 320 A1 ist eine Beschichtereinrichtung für eine Bauvorrichtung zur Erstellung von Formteilen aus pulverartigem Baumaterial unter Einbringung von Strahlungsenergie bekannt. Aus der DE 10 2012 107 297 A1 ist ferner ein Arbeitsverfahren und eine Vorrichtung zum Auftragen, Aushärten und zur Oberflächenbearbeitung von pulverförmigen Werkstoffen auf Bauflächen bekannt. Aus der WO 2015/173355 ist eine Steuereinheit, eine Vorrichtung und ein Verfahren zum Herstellen eines dreidimensionalen Objekts bekannt.

Aus dem Stand der Technik sind aber insbesondere auch generative Herstellverfahren für die Herstellung von Bauteilen einer Strömungsmaschine, wie beispielsweise von Bauteilen eines Flugtriebwerks oder einer Gasturbine bekannt, z.B. das in der DE 10 2009 051 479 A1 beschriebene Verfahren bzw. eine entsprechende Vorrichtung zur Herstellung eines Bauteils einer Strömungsmaschine.

Bei diesem Verfahren wird durch schichtweisen Auftrag von mindestens einem pulverförmigen Bauteilwerkstoff auf einer Bauteilplattform im Bereich einer Aufbau- und Fügezone sowie schichtweises und lokales Schmelzen oder Sintern des Bauteilwerkstoffs mittels im Bereich der Aufbau- und Fügezone zugeführter Energie ein entsprechendes Bauteil hergestellt. Die Zufuhr der Energie erfolgt hierbei über Laserstrahlen, wie beispielsweise CO2-Laser, Nd:YAG-Laser, Yb-Faserlaser sowie Diodenlaser, oder durch Elektronenstrahlen. Üblicherweise werden derartige generative Fertigungsverfahren unter einer Schutzgasatmosphäre, wie zum Beispiel einer mit Argon oder Stickstoff angereicherten Bearbeitungsumgebung durchgeführt, um die Kontaminierung des Bauteilwerkstoffs mit Sauerstoff zu vermeiden. Zudem können Gas- oder Luftströmungen flach über das Pulverbett bzw. die Bauteilplattform geführt werden. Dadurch werden Prozessverunreinigungen von einer entsprechenden Einblasvorrichtung hin zu einer entsprechenden Absaugvorrichtung bewegt.

Als nachteilig an den bekannten Vorrichtungen und Verfahren ist aber der Umstand anzusehen, dass die Entfernung von während des generativen Herstellungsverfahrens entstehenden Schmauchs, Spritzern, Partikeln und Prozessabgasen nur ungenügend oder mit relativ hohem apparativem Aufwand möglich ist.

Aufgabe der vorliegenden Erfindung ist es daher, eine Vorrichtung und ein Verfahren der eingangs genannten Art zu schaffen, die eine verbesserte Entfernung von während eines generativen Herstellungsverfahrens entstehenden Schmauchs, Spritzern, Partikeln und/oder Prozessabgasen bei relativ geringen apparativem Aufwand ermöglichen.

Diese Aufgabe wird erfindungsgemäß durch eine Vorrichtung mit den Merkmalen des Patentanspruchs 1 zur generativen Herstellung zumindest eines Bauteilbereichs eines Bauteils und durch ein Verfahren mit den Merkmalen des Anspruchs 7 gelöst. Vorteilhafte Ausgestaltungen mit zweckmäßigen Weiterbildungen der Erfindung sind in den jeweiligen Unteransprüchen angegeben, wobei vorteilhafte Ausgestaltungen der Vorrichtung als vorteilhafte Ausgestaltungen des Verfahrens sowie des Beschichters und umgekehrt anzusehen sind.

Ein erster Aspekt der Erfindung betrifft eine Vorrichtung zur generativen Herstellung zumindest eines Bauteilbereichs eines Bauteils, insbesondere eines Bauteils einer Strömungsmaschine. Die Vorrichtung umfasst dabei mindestens einen Beschichter zum Auftrag von mindestens einer Pulverschicht eines Bauteilwerkstoffs auf mindestens eine Aufbau- und Fügezone mindestens einer absenkbaren Bauteilplattform, wobei der Beschichter relativ zu der Bauteilplattform bewegbar ist und mindestens eine Absaugvorrichtung zur Absaugung von Prozessabgasen und/oder -partikeln. Zudem umfasst der Beschichter mindestens einen Absaugkanal oder mindestens ein Absaugrohr mit mindestens einer in Richtung der Bauteilplattform ausgerichteten Absaugöffnung, wobei der Absaugkanal oder das Absaugrohr derart angeordnet sind, dass bei einer vordefinierten Stillstandsposition des Beschichters außerhalb der Bauteilplattform der Absaugkanal oder das Absaugrohr mit der Absaugvorrichtung zur Ablenkung eines Gas- und/oder Partikelstroms in Wirkverbindung steht. Durch die Anordnung des Absaugkanals oder -rohrs an dem Beschichter ist es möglich, Schmauch, Spritzer, Partikel und/oder Prozessabgase des generativen Herstellungsprozesses zuverlässig aus der Aufbau- und Fügezone zu entfernen. In einer vordefinieren Stillstandsposition des Beschichters dockt der Absaugkanal oder das Absaugrohr an die vorhandene Absaugvorrichtung der Vorrichtung an, so dass der im Bereich der Aufbau- und Fügezone vorhandene Gas- und/oder Partikelstrom abgelenkt wird, derart, dass Schmauch, Spritzer, Partikel und/oder Prozessabgase beispielsweise direkt in einen Überlaufbehälter der Vorrichtung überführt werden. Die erfindungsgemäße Lösung ist vorteilhafterweise mit relativ geringem apparativen Aufwand durchführbar. Insgesamt ergibt sich durch die erfindungsgemäße Vorrichtung eine deutliche Erhöhung der Qualität der generativ hergestellten Bauteile. Zudem können Prozessabgase - soweit gewünscht - wieder in den Herstellungsprozess eingebunden werden. Unter den Begriffen "angeordnet" oder "Anordnung" ist zu verstehen, dass der Absaugkanal oder das Absaugrohr direkt oder indirekt mit dem Beschichter verbunden werden kann. Beispielsweise ist eine mechanische Verbindung mit dem Beschichter möglich. Die relative Bewegbarkeit des Beschichters relativ zu der Bauteilplattform kann entweder durch die Bewegung des Beschichters mittels einer entsprechenden Verfahreinheit oder durch Bewegen der Bauteilplattform erfolgen. Bei der letztgenannten Ausführungsform kann gegebenenfalls auf eine separate Verfahreinheit des Beschichters verzichtet werden.

In der erfindungsgemäßen Vorrichtung ist der Absaugkanal oder das Absaugrohr als separates Bauteil ausgebildet und an einem Gehäuse des Beschichters angeordnet. Vorteilhafterweise können bereits vorhandene Vorrichtungen zur generativen Herstellung von Bauteilen mit einem entsprechenden Absaugkanal oder -rohr, die an dem Beschichter angeordnet werden, ohne Weiteres nachgerüstet werden. Dabei kann der Absaugkanal bzw. das Absaugrohr als Blechteil ausgebildet sein. Es ist aber auch möglich, dass
der Absaugkanal oder das Absaugrohr einstückig mit einem Gehäuse des Beschichters ausgebildet ist. Hierdurch verringert sich die Anzahl der zu verwendenden Bauteile.

In weiteren vorteilhaften Ausgestaltungen der erfindungsgemäßen Vorrichtung ist die Absaugvorrichtung im Bereich eines Überlaufbehälters und/oder im Bereich eines Vorrats- und/oder Dosierbehälters der Vorrichtung angeordnet. Durch die Anordnung der Absaugvorrichtung im Bereich des Überlaufbehälters ist gewährleistet, dass die Stillstandsposition des Beschichters ebenfalls in diesem Bereich liegt. Somit erfolgt eine Ankoppelung des Absaugkanals oder des Absaugrohrs an die Absaugvorrichtung in Bereich des Überlaufbehälters, wodurch gewährleistet ist, dass ein Großteil des entstehenden Schmauchs, der Spritzer, der Partikel und/oder der Prozessabgase direkt in den Überlaufbehälter überführt werden. Es ist aber auch möglich, die Absaugvorrichtung zusätzlich oder ausschließlich im Bereich des Vorrats- und/oder Dosierbehälters der Vorrichtung anzuordnen. Auch hierdurch wird der im Bereich der Aufbau- und Fügezone vorhandene Gas- und/oder Partikelstroms abgelenkt, so dass Schmauch, Spritzer, Partikel und/oder Prozessabgase zuverlässig aus der Aufbau- und Fügezone der Vorrichtung entfernt werden.

In einer weiteren vorteilhaften Ausgestaltung der erfindungsgemäßen Vorrichtung umfasst diese mindestens eine Gaszuführungsvorrichtung zur Zuführung von mindestens einem Gas und/oder einem Prozessgas zumindest in den Bereich der Bauteilplattform, insbesondere in den Bereich der Aufbau- und Fügezone. Die Zuführung von Gas dient zur aktiven Steuerung der Strömungsverhältnisse in diesem Bereich. Es ist aber auch möglich, über die Gaszuführungsvorrichtung ein Prozessgas in Form eines Inertgases der Aufbau- und Fügezone der Bauteilplattform zur Verbesserung der Fügequalität des entstehenden Bauteils zuzuführen. Auch das Prozessgas kann zur aktiven Steuerung der Strömungsverhältnisse in diesem Bereich dienen.

In weiteren vorteilhaften Ausgestaltungen der erfindungsgemäßen Vorrichtung weisen der Absaugkanal oder das Absaugrohr jeweils ein erstes und ein zweites Ende auf, wobei das erste Ende der Absaugvorrichtung zugewandt ausgebildet ist und mindestens eine Öffnung umfasst und die Öffnung in der vordefinierten Stillstandsposition des Beschichters mit mindestens einer Öffnung der Absaugvorrichtung zumindest teilweise zur Deckung kommt. Dadurch ist gewährleistet, dass der Absaugkanal bzw. das Absaugrohr mit der Absaugvorrichtung in Wirkverbindung kommt, d.h. es kann eine gas- bzw. fluidleitende Verbindung ausgebildet werden. Zudem besteht die Möglichkeit, dass die Öffnung des ersten Endes des Absaugkanals oder des Absaugrohrs und/oder die Öffnung der Absaugvorrichtung eine Dichtlippe aufweisen. Vorteilhafterweise kann hierdurch die entstehende Saugwirkung am Absaugkanal oder -rohr verstärkt werden. Ebenfalls zur Verstärkung der Saugwirkung kann das zweite Ende des Absaugkanals oder des Absaugrohrs verschlossen ausgebildet sein.

Ein zweiter Aspekt der Erfindung betrifft ein Verfahren zur generativen Herstellung zumindest eines Bauteilbereichs eines Bauteils, insbesondere eines Bauteils einer Strömungsmaschine. Das erfindungsgemäße Verfahren umfasst dabei zumindest folgende Schritte: a) Auftragen von mindestens einer Pulverschicht eines Bauteilwerkstoffs mittels eines Beschichters auf mindestens eine Aufbau- und Fügezone von mindestens einer absenkbaren Bauteilplattform; b) Schichtweises und lokales Verschmelzen und/oder Versintern des Bauteilwerkstoffs durch Zuführen von Energie mittels wenigstens eines Hochenergiestrahls im Bereich der Aufbau- und Fügezone zum Ausbilden einer Bauteilschicht; c) Schichtweises Absenken der Bauteilplattform um eine vordefinierte Schichtdicke; und d) Wiederholen der Schritte a) bis c) bis zur Fertigstellung des Bauteilbereichs. Während einer vordefinierten Stillstandsposition des Beschichters außerhalb der Bauteilplattform steht mindestens ein an dem Beschichter angeordneter Absaugkanal oder mindestens ein an dem Beschichter angeordnetes Absaugrohr mit einer Absaugvorrichtung in Wirkverbindung steht, derart, dass eine Ablenkung eines Gas- und/oder Partikelstroms aus der Aufbau- und Fügezone in Richtung mindestens einer in Richtung der Bauteilplattform ausgerichteten Absaugöffnung des Absaugkanals oder des Absaugrohrs erfolgt. Dadurch ist eine besonders zuverlässige Entfernung von Schmauch, Spritzern, Prozessabgasen sowie anderen unerwünschten Gasen oder Partikeln aus dem Bereich der Aufbau- und Fügezone möglich. In der vordefinieren Stillstandsposition des Beschichters dockt der Absaugkanal oder das Absaugrohr an die vorhandene Absaugvorrichtung an, so dass der im Bereich der Aufbau- und Fügezone vorhandene Gas- und/oder Partikelstroms abgelenkt wird, derart, dass Schmauch, Spritzer, Partikel und/oder Prozessabgase beispielsweise direkt in einen Überlaufbehälter überführt werden können.

Beschrieben wird auch ein Beschichter zur Verwendung in einer Vorrichtung zur generativen Herstellung zumindest eines Bauteilbereichs eines Bauteils. Der Beschichter umfasst mindestens einen Absaugkanal oder mindestens ein Absaugrohr mit mindestens einer in Richtung einer Bauteilplattform der Vorrichtung ausgerichteten Absaugöffnung, wobei der Absaugkanal oder das Absaugrohr derart angeordnet ist, dass bei einer vordefinierten Stillstandsposition des Beschichters außerhalb der Bauteilplattform der Absaugkanal oder das Absaugrohr mit einer Absaugvorrichtung der Vorrichtung zur Ablenkung eines Gas- und/oder Partikelstroms in Wirkverbindung steht. In einer vordefinieren Stillstandsposition des Beschichters dockt der Absaugkanal oder das Absaugrohr an die vorhandene Absaugvorrichtung der Vorrichtung an, so dass der im Bereich einer Aufbau- und Fügezone der Bauteilplattform vorhandene Gas- und/oder Partikelstroms abgelenkt wird, derart, dass Schmauch, Spritzer, Partikel und/oder Prozessabgase beispielsweise direkt in einen Überlaufbehälter der Vorrichtung überführt werden. Die erfindungsgemäße Lösung ist vorteilhafterweise mit relativ geringem apparativen Aufwand durchführbar. Unter den Begriffen "anordenbar" oder "anbringbar" ist zu verstehen, dass der Absaugkanal bzw. das Absaugrohr direkt oder indirekt mit dem Beschichter verbunden werden kann. Beispielsweise ist eine mechanische Verbindung mit dem Beschichter möglich. Der erfindungsgemäße Beschichter ermöglicht eine besonders zuverlässige Entfernung von Schmauch, Spritzern, Partikeln und/oder Prozessabgasen aus einem Bereich einer Aufbau- und Fügezone bei der Durchführung eines generativen Herstellungsverfahrens.

In weiteren vorteilhaften Ausgestaltungen des erfindungsgemäßen Beschichters ist der Absaugkanal oder das Absaugrohr als separates Bauteil ausgebildet und an einem Gehäuse des Beschichters angeordnet. Vorteilhafterweise können bereits vorhandene Vorrichtungen zur generativen Herstellung von Bauteilen mit einem entsprechenden Absaugkanal oder -rohr, die an dem Beschichter angeordnet werden, ohne Weiteres nachgerüstet werden. Dabei kann der Absaugkanal bzw. das Absaugrohr als Blechteil ausgebildet sein. Es ist aber auch möglich, dass der Absaugkanal oder das Absaugrohr einstückig mit einem Gehäuse des Beschichters ausgebildet ist. Hierdurch verringert sich die Anzahl der zu verwendenden Bauteile.

In weiteren vorteilhaften Ausgestaltungen des erfindungsgemäßen Beschichters weisen der Absaugkanal oder das Absaugrohr jeweils ein erstes und ein zweites Ende auf, wobei das erste Ende der Absaugvorrichtung zugewandt ausgebildet ist und mindestens eine Öffnung umfasst und die Öffnung in der vordefinierten Stillstandsposition des Beschichters mit mindestens einer Öffnung der Absaugvorrichtung zumindest teilweise zur Deckung kommt. Dadurch ist gewährleistet, dass der Absaugkanal bzw. das Absaugrohr mit der Absaugvorrichtung in Wirkverbindung kommt, d.h. es kann eine gas- bzw. fluidleitende Verbindung ausgebildet werden. Zudem besteht die Möglichkeit, dass die Öffnung des ersten Endes des Absaugkanals oder des Absaugrohrs und/oder die Öffnung der Absaugvorrichtung eine Dichtlippe aufweisen. Vorteilhafterweise kann hierdurch die entstehende Saugwirkung am Absaugkanal oder -rohr verstärkt werden. Ebenfalls zur Verstärkung der Saugwirkung kann das zweite Ende des Absaugkanals oder des Absaugrohrs verschlossen ausgebildet sein.

Weitere Merkmale der Erfindung ergeben sich aus den Ansprüchen, dem im Folgenden beschriebenen Ausführungsbeispiel der erfindungsgemäßen Vorrichtung sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
- Fig. 1: eine schematische Darstellung einer erfindungsgemäßen Vorrichtung zur Herstellung zumindest eines Bauteilbereichs eines Bauteils; und
- Fig. 2: eine schematische Seitendarstellung der Vorrichtung gemäß Figur 1.

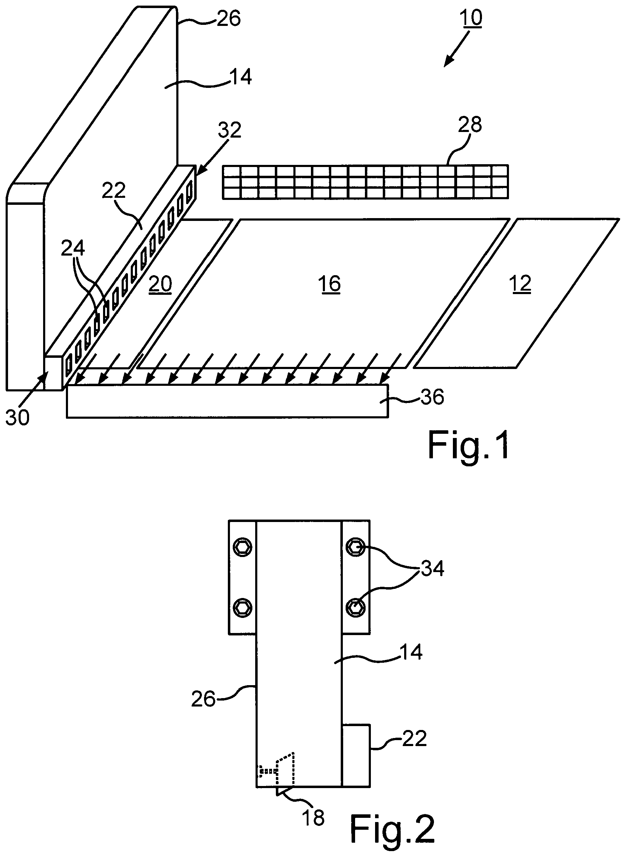

Fig. 1 zeigt eine schematisch Darstellung einer Vorrichtung 10 zur generativen Herstellung zumindest eines Bauteilbereichs eines Bauteils, insbesondere eines Bauteils einer Strömungsmaschine. Insbesondere kann es sich dabei um ein Bauteil einer Turbine oder eines Verdichters eines Flugtriebwerks handeln. Die Vorrichtung 10 weist einen Beschichter 14 zum Auftrag von mindestens einer Pulverschicht eines Bauteilwerkstoffs (nicht dargestellt) auf zumindest eine Aufbau- und Fügezone einer absenkbaren Bauteilplattform 16 auf. Die Bewegung des Beschichters 14 erfolgt dabei über und entlang der Bauteilplattform 16, so dass ein gleichmäßiger und schichtweiser Auftrag des pulverförmigen Bauteilwerkstoffs auf die Bauteilplattform 16 möglich ist. Der pulverförmige Bauteilwerkstoff ist in einem Vorrats- und/oder Dosierbehälter 12 gelagert und wird durch den Beschichter 14 daraus in die Aufbau- und Fügezone der Bauteilplattform 16 zugeführt. Der Bauteilplattform 16 schließt sich an der dem Vorrats- und/oder Dosierbehälter 12 abgewandten Seite ein Überlaufbehälter 20 zur Aufnahme von insbesondere überschüssigen Bauteilwerkstoff an. Zur Herstellung von Bauteilen einer Turbine oder eines Verdichters eines Flugtriebwerks werden insbesondere pulverförmige Bauteilwerkstoffe aus Metall, Metall-Legierungen und/oder Keramik verwendet. Es ist jedoch denkbar, auch andere geeignete Materialien wie zum Beispiel Kunststoffe zu verwenden.

Man erkennt, dass an einem Gehäuse 26 des Beschichters 14 ein Absaugkanal 22 angeordnet ist. Der Absaugkanal 22 weist dabei eine Vielzahl von in Richtung der Bauteilplattform 16 ausgerichteten Absaugöffnungen 24 auf. Der Absaugkanal 22 ist dabei derart an dem Beschichter 14 angeordnet, dass bei einer vordefinierten Stillstandsposition des Beschichters 14 außerhalb der Bauteilplattform 16 dieser mit einer Absaugvorrichtung 36 der Vorrichtung 10 zur Ablenkung eines im Bereich der Bauteilplattform 16 bestehenden Gas- und/oder Partikelstroms in Wirkverbindung steht. In dem dargestellten Ausführungsbeispiel befindet sich die genannte Stillstandsposition des Beschichters 14 im Bereich des Überlaufbehälters 20. In dieser Position verweilt der Beschichter 14 bis er wieder in Richtung der Bauteilplattform 16 zum Auftrag einer weiteren Beuteilschicht und/oder in Richtung des Vorrats- und/oder Dosierbehälters 12 bewegt wird.

Des Weiteren erkennt man, dass die Vorrichtung 10 eine Gaszuführungsvorrichtung 28 zur Zuführung von mindestens einem Gas und/oder einem Prozessgas in den Bereich der Bauteilplattform 16, insbesondere in den Bereich der Aufbau- und Fügezone aufweist. Die Zuführung von Gas dient zur aktiven Steuerung der Strömungsverhältnisse in diesem Bereich. Zudem kann über die Gaszuführungsvorrichtung ein Prozessgas in Form eines Inertgases der Aufbau- und Fügezone der Bauteilplattform 16 zur Verbesserung der Fügequalität des entstehenden Bauteils zugeführt werden. Das Prozessgas kann natürlich auch zur aktiven Steuerung der Strömungsverhältnisse in diesem Bereich verwendet werden.

Der Absaugkanal 22 weist in dem dargestellten Ausführungsbeispiel einen rechteckigen Querschnitt auf. Andere Querschnittsformen, z.B. ein runder Querschnitt, sind denkbar und möglich. Man erkennt, dass der Absaugkanal 22 ein erstes und ein zweites Ende 30, 32 aufweist, wobei das erste Ende 30 der Absaugvorrichtung 36 zugewandt ausgebildet ist und mindestens eine Öffnung umfasst. Die Öffnung in dem ersten Ende 30 kommt in der vordefinierten Stillstandsposition des Beschichters 14 mit mindestens einer Öffnung der Absaugvorrichtung 36 zumindest teilweise zur Deckung (nicht dargestellt). Dadurch kommt der Absaugkanal 22 mit der Absaugvorrichtung 36 in Wirkverbindung, d.h. es kann eine gas- bzw. fluidleitende Verbindung ausgebildet werden. Zur Verstärkung der Saugwirkung ist das zweite Ende 32 des Absaugkanals 22 verschlossen ausgebildet.

In der Figur 1 ist die Koppelung des Absaugkanals 22 mit der Absaugvorrichtung 36 aus zeichentechnischen Gründen nicht dargestellt. In der Praxis kommt es aber in der Stillstandsposition des Beschichters 14 zu einem Andocken des Absaugkanals 22 an die vorhandene Absaugvorrichtung 36, wodurch eine Saugwirkung entsteht, aufgrund deren der im Bereich einer Aufbau- und Fügezone der Bauteilplattform 16 vorhandene Gas- und/oder Partikelstrom derart ablenkt wird, dass Schmauch, Spritzer, Partikel und/oder Prozessabgase beispielsweise direkt in den Überlaufbehälter 20 der Vorrichtung 10 überführt werden.

Fig. 2 zeigt eine schematische Seitendarstellung der Vorrichtung 10 gemäß Figur 1. Man erkennt, dass in dem dargestellten Ausführungsbeispiel der Absaugkanal 22 als separates Bauteil ausgebildet ist und an dem Gehäuse 26 des Beschichters 14 angeordnet ist, d.h. er ist mit dem Gehäuse 26 verbunden. Zudem erkennt man, dass der Beschichter 14 eine Klinge 18 für den schichtweisen Auftrag des pulverförmigen Bauteilwerkstoffs (nicht dargestellt) auf der Bauteilplattform 16 aufweist. Alternativ zu der Klinge 18 können auch andere Glättvorrichtungen wie zum Beispiel Rakel, Lippen, ein Kämme oder Walzen verwendet werden. Schließlich weist der Beschichter 14 mehrere Befestigungsvorrichtungen 34 zur Verbindung mit einer Verfahreinrichtung (nicht dargestellt) auf.

### Bezugszeichenliste:

- 10: Vorrichtung
- 12: Dosierbehälter
- 14: Beschichter
- 16: Bauteilplattform
- 18: Klinge
- 20: Überlaufbehälter
- 22: Absaugkanal/Absaugrohr
- 24: Absaugöffnungen
- 26: Gehäuse
- 28: Gaszuführungsvorrichtung
- 30: Erstes Ende Absaugkanal/Absaugrohr
- 32: Zweites Ende Absaugkanal/Absaugrohr
- 34: Befestigungsvorrichtung
- 36: Absaugvorrichtung

## Patentansprüche

1. Vorrichtung (10) zur generativen Herstellung zumindest eines Bauteilbereichs eines Bauteils, insbesondere eines Bauteils einer Strömungsmaschine, umfassend:
- mindestens einen Beschichter (14) zum Auftrag von mindestens einer Pulverschicht eines Bauteilwerkstoffs auf mindestens eine Aufbau- und Fügezone mindestens einer absenkbaren Bauteilplattform (16), wobei der Beschichter (14) relativ zu der Bauteilplattform (16) bewegbar ist; und
- mindestens eine Absaugvorrichtung (36) zur Absaugung von Prozessabgasen und/oder -partikeln
**dadurch gekennzeichnet, dass**
der Beschichter (14) mindestens einen Absaugkanal (22) oder mindestens ein Absaugrohr mit mindestens einer in Richtung der Bauteilplattform (16) ausgerichteten Absaugöffnung (24) umfasst, wobei der Absaugkanal (22) oder das Absaugrohr als separates Bauteil ausgebildet und an einem Gehäuse des Beschichters angeordnet ist, so dass bei einer vordefinierten Stillstandsposition des Beschichters (14) außerhalb der Bauteilplattform (16) der Absaugkanal (22) oder das Absaugrohr mit der Absaugvorrichtung (36) zur Ablenkung eines Gas- und/oder Partikelstroms durch Ankoppelung in Wirkverbindung steht, um eine gas- bzw. fluidleitende Verbindung auszubilden.

2. Vorrichtung (10) nach einem der vorhergehenden Ansprüche,
**dadurch gekennzeichnet, dass**

3. die Absaugvorrichtung (36) im Bereich eines Überlaufbehälters (20) und/oder im Bereich eines Vorrats- und/oder Dosierbehälters (12) der Vorrichtung (10) angeordnet ist.Vorrichtung (10) nach einem der vorhergehenden Ansprüche,
**dadurch gekennzeichnet, dass**
die Vorrichtung (10) mindestens eine Gaszuführungsvorrichtung (28) zur Zuführung von mindestens einem Gas und/oder einem Prozessgas zumindest in den Bereich der Bauteilplattform (16) umfasst.

4. Vorrichtung (10) nach einem der vorhergehenden Ansprüche, **dadurch gekennzeichnet, dass**
der Absaugkanal (22) oder das Absaugrohr jeweils ein erstes und ein zweites Ende (30, 32) aufweisen, wobei das erste Ende (30) der Absaugvorrichtung (36) zugewandt ausgebildet ist und mindestens eine Öffnung umfasst und die Öffnung in der vordefinierten Stillstandsposition des Beschichters (14) mit mindestens einer Öffnung der Absaugvorrichtung (36) zumindest teilweise zur Deckung kommt.

5. Vorrichtung (10) nach Anspruch 4,
**dadurch gekennzeichnet, dass**
die Öffnung des ersten Endes (30) des Absaugkanals (22) oder des Absaugrohrs und/oder die Öffnung der Absaugvorrichtung (36) eine Dichtlippe aufweisen.

6. Vorrichtung (10) nach Anspruch 4 oder 5,
**dadurch gekennzeichnet, dass**
das zweite Ende (32) des Absaugkanals (22) oder des Absaugrohrs verschlossen ausgebildet ist.

7. Verfahren zur generativen Herstellung zumindest eines Bauteilbereichs eines Bauteils, insbesondere eines Bauteils einer Strömungsmaschine, zumindest folgende Schritte umfassend:
a) Auftragen von mindestens einer Pulverschicht eines Bauteilwerkstoffs mittels eines Beschichters (14) auf mindestens eine Aufbau- und Fügezone von mindestens einer absenkbaren Bauteilplattform (16);
b) Schichtweises und lokales Verschmelzen und/oder Versintern des Bauteilwerkstoffs durch Zuführen von Energie mittels wenigstens eines Hochenergiestrahls im Bereich der Aufbau- und Fügezone zum Ausbilden einer Bauteilschicht;
c) Schichtweises Absenken der Bauteilplattform (16) um eine vordefinierte Schichtdicke; und
d) Wiederholen der Schritte a) bis c) bis zur Fertigstellung des Bauteilbereichs, **dadurch gekennzeichnet, dass**
während einer vordefinierten Stillstandsposition des Beschichters (14) außerhalb der Bauteilplattform (16) mindestens ein an dem Beschichter (14) angeordneter Absaugkanal (22) oder mindestens ein an dem Beschichter (14) angeordnetes Absaugrohr mit einer Absaugvorrichtung (36) durch Ankoppelung in Wirkverbindung steht, wobei der Absaugkanal (22) oder das Absaugrohr als separates Bauteil ausgebildet und an einem Gehäuse des Beschichters angeordnet ist, um eine gas- bzw. fluidleitende Verbindung auszubilden, derart, dass eine Ablenkung eines Gas- und/oder Partikelstroms aus der Aufbau- und Fügezone in Richtung mindestens einer in Richtung der Bauteilplattform (16) ausgerichteten Absaugöffnung (24) des Absaugkanals (22) oder des Absaugrohrs erfolgt.

## Claims

1. Device (10) for the additive manufacturing of at least one component region of a component, in particular of a component of a turbomachine, comprising:
- at least one coater (14) for applying at least one powder layer of a component material onto at least one build-up and joining region of at least one lowerable component platform (16), the coater (14) being movable relative to the component platform (16); and
- at least one suction device (36) for suctioning off process waste gases and/or particles, **characterized in that** the coater (14) comprises at least one suction channel (22) or at least one suction pipe comprising at least one suction opening (24) oriented toward the component platform (16), the suction channel (22) or the suction pipe being designed as a separate component and being arranged on a housing of the coater such that, when the coater (14) is in a predefined idle position outside of the component platform (16), the suction channel (22) or the suction pipe is operatively connected, by coupling, to the suction device (36) for deflecting a gas and/or particle flow so as to be in gaseous or fluid communication therewith.

2. Device (10) according to any of the preceding claims, **characterized in that** the suction device (36) is arranged in the region of an overflow container (20) and/or in the region of a storage and/or metering container (12) of the device (10).

3. Device (10) according to either of the preceding claims, **characterized in that** the device (10) comprises at least one gas supply device (28) for supplying at least one gas and/or one process gas at least into the region of the component platform (16).

4. Device (10) according to any of the preceding claims, **characterized in that** the suction channel (22) or the suction pipe each comprises a first and a second end (30, 32), the first end (30) being designed to face the suction device (36) and comprising at least one opening, and the opening coming into alignment with at least one opening in the suction device (36) at least in part when the coater (14) is in the predefined idle position.

5. Device (10) according to claim 4, **characterized in that** the opening in the first end (30) of the suction channel (22) or the suction pipe and/or the opening in the suction device (36) comprise a sealing lip.

6. Device (10) according to either claim 4 or claim 5, **characterized in that** the second end (32) of the suction channel (22) or the suction pipe is closed.

7. Method for the additive manufacturing of at least one component region of a component, in particular of a component of a turbomachine, comprising at least the following steps:
a) applying at least one powder layer of a component material onto at least one build-up and joining region of at least one lowerable component platform (16) by means of a coater (14);
b) locally fusing and/or sintering the component material layer by layer by supplying energy by means of at least one high-energy beam in the region of the build-up and joining region in order to form a component layer;
c) lowering the component platform (16) layer by layer by a predefined layer thickness; and
d) repeating steps a) to c) until the component region has been finished, **characterized in that**, when the coater (14) is in a predefined idle position outside of the component platform (16), at least one suction channel (22) arranged on the coater (14) or at least one suction pipe arranged on the coater (14) is operatively connected, by coupling, to a suction device (36), the suction channel (22) or the suction pipe being designed as a separate component and being arranged on a housing of the coater so as to be in gaseous or fluid communication therewith, such that a gas and/or particle flow is deflected from the build-up and joining region toward at least one suction opening (24) in the suction channel (22) or the suction pipe, which opening is oriented toward the component platform (16).

## Revendications

1. Dispositif (10) pour la production générative d'au moins une région d'un composant, en particulier d'un composant de turbomachine, comprenant :
- au moins un système d'enduction (14) pour appliquer au moins une couche de poudre d'un matériau de composant sur au moins une zone d'assemblage et de jonction d'au moins une plateforme de composant abaissable (16), le système d'enduction (14) étant mobile par rapport à la plateforme de composant (16) ; et
- au moins un dispositif d'aspiration (36) pour aspirer les gaz et/ou particules d'échappement de traitement
**caractérisé en ce que** le système d'enduction (14) comprend au moins un conduit d'aspiration (22) ou au moins un tube d'aspiration pourvu d'au moins un orifice d'aspiration (24) orienté dans la direction de la plateforme de composant (16), le conduit d'aspiration (22) ou le tube d'aspiration étant formé en tant que composant séparé et agencé sur un boîtier du système d'enduction, de sorte qu'à une position d'arrêt prédéfinie du système d'enduction (14) à l'extérieur de la plateforme de composant (16), le conduit d'aspiration (22) ou le tube d'aspiration est relié de manière opérationnelle au dispositif d'aspiration (36) pour dévier un flux de gaz et/ou de particules par couplage, afin de former une liaison conductrice de gaz ou de fluide.

2. Dispositif (10) selon l'une des revendications précédentes, **caractérisé en ce que** le dispositif d'aspiration (36) est agencé dans la zone d'un réservoir de trop-plein (20) et/ou dans la zone d'un réservoir de stockage et/ou d'un réservoir de dosage (12) du dispositif (10).

3. Dispositif (10) selon l'une des revendications précédentes, **caractérisé en ce que** le dispositif (10) comprend au moins un dispositif d'alimentation en gaz (28) pour alimenter au moins un gaz et/ou un gaz de traitement au moins dans la zone de la plateforme de composant (16).

4. Dispositif (10) selon l'une des revendications précédentes, **caractérisé en ce que** le conduit d'aspiration (22) ou le tube d'aspiration ont chacun une première et une seconde extrémité (30, 32), la première extrémité (30) du dispositif d'aspiration (36) étant formée en regard et comprenant au moins un orifice, et l'orifice coïncidant au moins partiellement dans la position d'arrêt prédéfinie du système d'enduction (14) avec au moins un orifice du dispositif d'aspiration (36).

5. Dispositif (10) selon la revendication 4, **caractérisé en ce que** l'orifice de la première extrémité (30) du conduit d'aspiration (22) ou du tube d'aspiration et/ou l'orifice du dispositif d'aspiration (36) présente(nt) un joint d'étanchéité à lèvre.

6. Dispositif (10) selon la revendication 4 ou 5, **caractérisé en ce que** la seconde extrémité (32) du conduit d'aspiration (22) ou du tube d'aspiration est formée de manière fermée.

7. Procédé de production générative d'au moins une région d'un composant, en particulier d'un composant de turbomachine, comprenant au moins les étapes suivantes :
a) l'application d'au moins une couche de poudre d'un matériau de composant au moyen d'un système d'enduction (14) sur au moins une zone d'assemblage et de jonction d'au moins une plateforme de composant abaissable (16) ;
b) la fusion et/ou le frittage en couches et local(e) du matériau du composant en alimentant de l'énergie au moyen d'au moins un faisceau à haute énergie dans la zone d'assemblage et la zone de jonction pour former une couche de composant ;
c) l'abaissement par couches de la plateforme de composant (16) d'une épaisseur de couche prédéfinie ; et
d) la répétition des étapes a) à c) jusqu'à l'achèvement de la zone de composant, **caractérisé en ce que**
à une position d'arrêt prédéfinie du système d'enduction (14) à l'extérieur de la plateforme de composant (16), au moins un conduit d'aspiration (22) agencé sur le système d'enduction (14) ou au moins un tube d'aspiration agencé sur le système d'enduction (14) est relié de manière opérationnelle par couplage à un dispositif d'aspiration (36), le conduit d'aspiration (22) ou le tube d'aspiration étant formé en tant que composant séparé et agencé sur un boîtier du système d'enduction pour former une liaison conductrice de gaz ou de fluide, de façon à produire une déviation d'un flux de gaz et/ou de particules provenant de la zone d'assemblage et/ou de jonction en direction d'au moins un orifice d'aspiration (24) du conduit d'aspiration (22) ou du tube d'aspiration orienté dans la direction de la plateforme de composant (16).
